# EUROPÄISCHE PATENTSCHRIFT

(11) **EP 2 688 789 B1**
(45) Veröffentlichungstag und Bekanntmachung des Hinweises auf die Patenterteilung: **25.10.2017**
(21) Anmeldenummer: 12711375.1
(22) Anmeldetag: 15.03.2012
(51) Int. Cl.: B62D 25/06, B62D 29/04

(54) **KUNSTSTOFFBAUELEMENT EINES DACHÖFFNUNGSSYSTEMS**
PLASTIC COMPONENT OF A ROOF OPENING SYSTEM
ÉLÉMENT CONSTITUTIF EN PLASTIQUE D'UN SYSTÈME D'OUVERTURE DE TOIT

(30) Priorität: 24.03.2011 DE 102011014989
(43) Veröffentlichungstag der Anmeldung: 29.01.2014
(73) Patentinhaber: Webasto SE, 82131 Stockdorf (DE)
(72) Erfinder: WIMMER, Rudolf, 82110 Germering (DE); DICHTL, Matthias, 82547 Eurasburg (DE)
(74) Vertreter: advotec.
(86) Internationale Anmeldenummer: PCT/EP2012/054508
(87) Internationale Veröffentlichungsnummer: WO 2012/126790

(56) Entgegenhaltungen:
- EP-A2- 1 325 862
- EP-A2- 1 459 881
- WO-A1-2010/017847
- DE-A1-102008 033 923
- DE-U1- 29 924 726

## Beschreibung

Die Erfindung betrifft ein Verfahren zur Herstellung eines Schiebedachrahmens eines Dachöffnungssystems sowie das Bauelement selbst.

Ein Bauelement eines Dachöffnungssystems ist beispielsweise ein Schiebedachrahmen, der bei der Montage an der Fertigungsstraße eines Fahrzeugherstellers von oben und/oder unten an einem Fahrzeugaufbau angebracht wird. Derartige Schiebedachrahmen werden bisher in der Regel aus Stahl gefertigt und tragen aufgrund des verwendeten Werkstoffs zur Erhöhung der Eigensteifigkeit des Fahrzeugrohbaus bei. Aus Stahl gefertigte Schiebedachrahmen haben ein hohes Eigengewicht, was insbesondere im Dachbereich eines Kraftfahrzeuges nicht erwünscht ist. Auch ist ein Stahlschiebedachrahmen nicht korrosionsbeständig. Ferner zeichnet sich ein Stahlschiebedachrahmen durch hohe Herstellungskosten aus, was auch in einer langen Erstellungsdauer der zur Herstellung genutzten Werkzeuge begründet ist. Ferner können an einem Stahlschiebedachrahmen Funktionalitäten für das Dachsystem, wie beispielsweise eine Lagerung eines Windabweisers bisweilen nur mit großem Aufwand integriert werden.

Aus der Druckschrift EP 1 459 881 A2 ist ein Verfahren zur Herstellung eines Fahrzeug-Karosserieteils bekannt, bei dem eine tiefgezogene Kunststofffolie in ein Werkzeug eingelegt wird, in dem weitere Schichten an die bereits tiefgezogene Kunststofffolie angeformt bzw. angebunden werden.

Aus Druckschrift EP 1 325 862 A2 ist ein modulartiges Fahrzeugdach bekannt, bei dem eine Innenschale an eine Dachaußenhaut angeschäumt ist. Die Dachaußenhaut kann ein vorgefertigtes Tiefziehteil sein.

Der Erfindung liegt die Aufgabe zugrunde, ein Verfahren zu schaffen, gemäß dem ein leichter und hinsichtlich der Integration von Funktionalitäten optimierter Schiebedachrahmen eines Dachöffnungssystems eines Kraftfahrzeuges herstellbar ist.

Diese Aufgabe ist erfindungsgemäß durch das Verfahren mit den Merkmalen des Patentanspruches 1 und durch einen Schiebdachrahmen eines Dachöffungssystems eines Kraftfahrzeuges gemäß Anspruch 5 gelöst. Erfindungsgemäß wird also ein Verfahren zur Herstellung eines Schiebedachrahmens eines Dachöffnungssystems eines Kraftfahrzeuges in ein Werkzeug vorgeschlagen, das mindestens einen Formhohlraum umfasst. Bei dem Verfahren wird mindestens ein plattenförmig ausgebildetes Halbzeug in das Werkzeug eingelegt. Dieses Halbzeug wird in dem Werkzeug zur Ausbildung mindestens eines Tiefziehabschnitts des Bauelements tiefgezogen. Durch Einbringen eines Kunststoffwerkstoffs in den Formhohlraum des Werkzeugs wird mindestens ein Formabschnitt ausgebildet und an den Tiefziehabschnitt angebunden. Das dann fertige Bauelement kann anschließend aus dem Werkzeug entformt werden und gegebenenfalls noch einer Nachbearbeitung unterzogen werden.

Bei dem Verfahren nach der Erfindung werden also in einem Werkzeug der Tiefziehabschnitt und der Formabschnitt des Schiebedachrahmens gefertigt, ohne dass ein Umlegen des Tiefziehabschnitts erfolgt. Der Tiefziehschritt und der durch das Einbringen des Kunststoffwerkstoffs erfolgende Spritzgieß- oder Schäumprozess laufen also prozesstechnisch einstufig ab. Bei dem für das Verfahren nach der Erfindung eingesetzten Werkzeug handelt es sich damit um ein kombiniertes Umform- und Spritzgieß- bzw. Schäumwerkzeug.

Bei dem Verfahren nach der Erfindung ist das Halbzeug aus einem glasfaserverstärkten Thermoplasten gebildet und der Tiefziehschritt ein Thermoformprozess. Das resultierende Bauelement ist damit komplett aus Kunststoff gefertigt und zeichnet sich dann durch ein geringes Eigengewicht aus. Auch kann durch die Kombination von Tiefziehabschnitt und Formabschnitt dem Bauelement eine hohe Festigkeit verliehen werden. Insbesondere können die Festigkeitsanforderungen durch entsprechende Auslegung des Werkstoffverbunds und der gewählten Werkstoffe optimal an die Systemanforderungen angepasst werden. Das komplett aus Kunststoff gefertigte Bauelement hat auch keine Korrosionsneigung. Durch den Einsatz von Kunststoff anstatt von Stahl zeichnet sich das resultierende Bauelement auch durch reduzierte Investitionskosten aus. In dem fertigen Bauelement können metallische Einlegeteile enthalten sein, beispielsweise Gewindebuchsen oder Blecheinleger für Verschraubungen.

Insbesondere kann die erforderliche Festigkeit bzw. Steifigkeit des Schiebedachrahmens durch Festlegung der Faserrichtung der Fasern in dem Thermoplasten bezüglich des Werkzeugs eingestellt werden.

Durch Umspritzung beim Einbringen des Kunststoffwerkstoffs, das heißt bei dem Spritzgießschritt, können Funktionalitäten in das Bauelement integriert werden. So können beispielsweise Anschraubdome, alternierende Kabelführungen und dergleichen integriert werden. Vorzugsweise wird hierzu ein Einlegeteil in das Werkzeug eingelegt und durch das Einbringen des Kunststoffwerkstoffs an das Bauelement angebunden bzw. mittels des Kunststoffwerkstoffs an den Tiefziehabschnitt angebunden.

Der Tiefziehabschnitt gibt vorzugsweise die Steifigkeit des Schiebedachrahmens vor. Der Formabschnitt stellt eine Funktionalität des Schiebedachrahmens dar. Beispielsweise dient der Formabschnitt zur Anbindung des Schiebedachrahmens an den Fahrzeugaufbau.

Die Erfindung hat auch einen Schiebedachrahmen eines Dachöffnungssystems eines Kraftfahrzeuges zum Gegenstand. Der Schiebedachrahmen ist aus einer einstückigen Baueinheit gebildet, die mindestens einen Tiefziehabschnitt aus einem tiefgezogenen, plattenförmigen Werkstoff und einen an den Tiefziehabschnitt angeformten Formabschnitt aus spritzgegossenem oder geschäumtem Kunststoff umfasst.

Einstückigkeit im Sinne der Erfindung liegt vor, wenn zwischen dem Tiefziehabschnitt und dem Formabschnitt Form- und Stoffschluss besteht, mithin ein Werkstoffverbund vorliegt.

Der Schiebedachrahmen umfasst insbesondere ein Rahmenvorderteil, das sich in Fahrzeugquerrichtung erstreckt, und zwei Seitenholme, die sich in Fahrzeuglängsrichtung erstrecken. Das Rahmenvorderteil und die Seitenholme sind als einstückige Baueinheit ausgebildet, die aus dem Tiefziehabschnitt und dem Formabschnitt gebildet sind.

Die einstückige Baueinheit, die den Schiebedachrahmen bildet, kann auch weitere Querstreben umfassen, die beispielsweise in einem mittleren Abschnitt und an den heckseitigen Enden eine Verbindung zwischen den Seitenholmen bilden.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Schiebedachrahmens nach der Erfindung und dessen Herstellung sind in der Zeichnung schematisch vereinfacht dargestellt und werden in der nachfolgenden Beschreibung näher erläutert.

Es zeigt:
- Fig. 1: eine perspektivische Darstellung eines Schiebedachrahmens;
- Fig. 2: ein Formwerkzeug in einem ersten Prozessschritt zur Herstellung des Schiebedachrahmens; und
- Fig. 3: das Formwerkzeug in einem zweiten Prozessschritt.

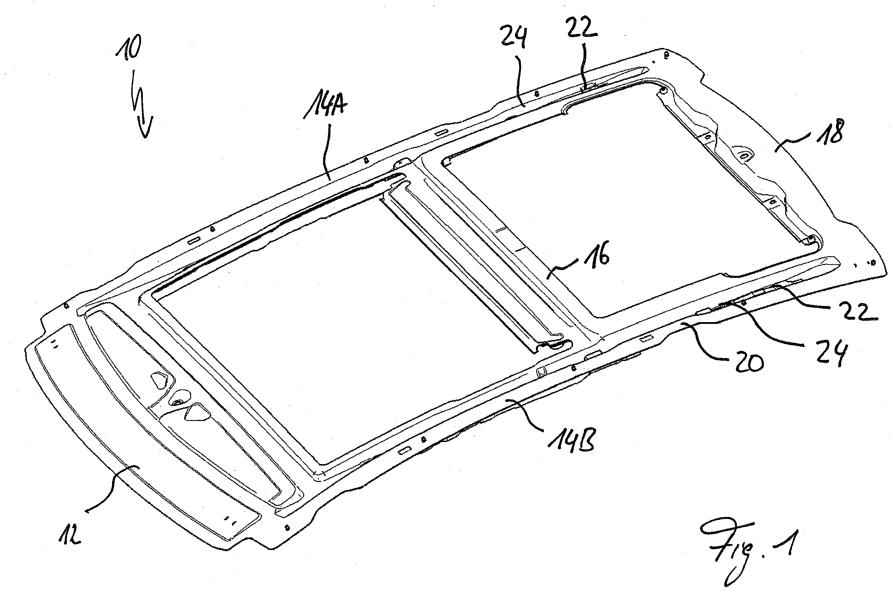

In Fig. 1 ist ein Schiebedachrahmen 10 dargestellt, der zur Integration eines Dachöffnungssystems in ein Dach eines ansonsten nicht näher dargestellten Kraftfahrzeuges dient. Der Schiebedachrahmen 10 umfasst ein Rahmenvorderteil 12 und zwei sich jeweils entlang eines Dachrandes erstreckende Seitenholme 14A und 14B, die in einem mittleren Abschnitt über einen Querholm 16 und heckseitig über einen Querholm 18 miteinander verbunden sind.

Der Schiebedachrahmen 10 ist aus Kunststoff gefertigt und stellt eine einstückige Baueinheit dar, die einen Tiefziehabschnitt 20 aus einem glasfaserverstärkten Thermoplasten sowie an den Tiefziehabschnitt 20 angeformte Formabschnitte 22 umfassen, die aus einem spritzgegossenen Kunststoff bestehen.

Der Tiefziehabschnitt 20 erstreckt sich über die gesamte Fläche des Schiebedachrahmens 10 und ist durch Thermoumformen eines plattenförmigen Halbzeugs aus dem glasfaserverstärkten Thermoplasten gebildet. Lokal sind in Aufnahmen 24 des Tiefziehabschnitts 20 die Formabschnitte 22 an den Tiefziehabschnitt 2 angeformt.

Der Schiebedachrahmen 10 stellt also ein Verbundbauteil dar, das aus zwei verschiedenen Kunststoffen hergestellt ist, wobei der eine Kunststoff den Tiefziehabschnitt 20 und der andere Kunststoff die Formabschnitte 22 bildet.

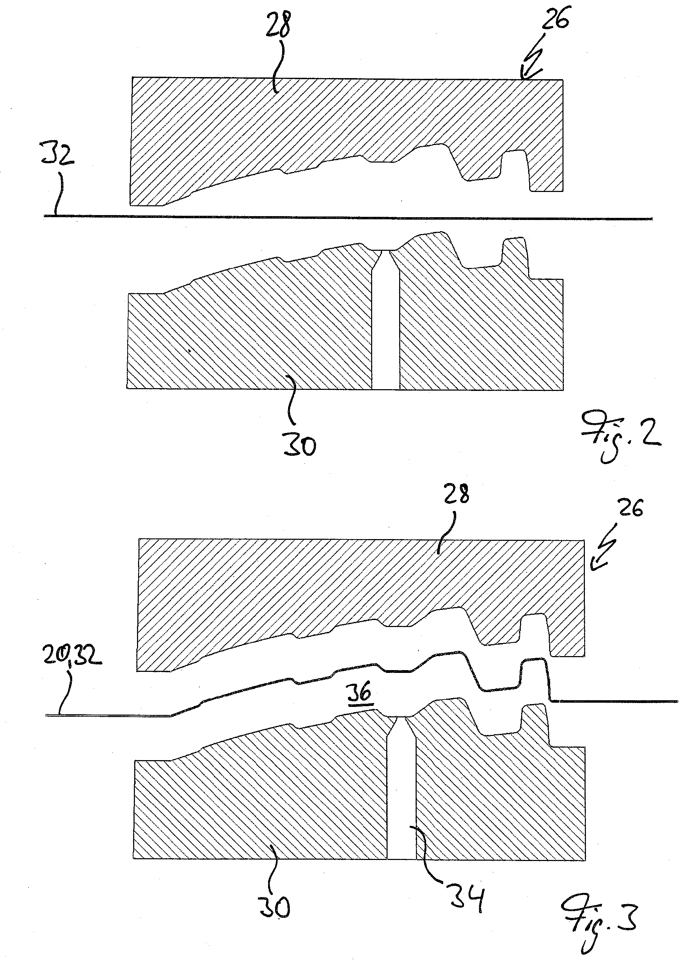

Die Herstellung des Schiebedachrahmens 10 wird nachfolgend anhand der Figuren 2 und 3 erläutert.

In ein Werkzeug 26, das ein Oberwerkzeug 28 und ein Unterwerkzeug 30 umfasst und als kombiniertes Thermoumform- und Spritzgießwerkzeug ausgebildet ist, wird ein Halbzeug aus einem plattenförmigen, glasfaserverstärkten Thermoplasten 32 eingelegt. Der Thermoplast 32 wird vor dem Einbringen in das Werkzeug 26 oder in dem Werkzeug 26 erwärmt und erweicht, so dass er einem Umformprozess unterzogen werden kann. Anschließend wird das Oberwerkzeug 28 gegen das Unterwerkzeug 30 gefahren, so dass der Thermoplast 32 entsprechend der Geometrie des Oberwerkzeugs 28 und der Geometrie des Unterwerkzeugs 30 umgeformt wird. Anschließend werden das Oberwerkzeug 28 und das Unterwerkzeug 30 wieder auseinander gefahren. Durch den vorstehend beschriebenen Tiefziehprozess wird aus dem Thermoplasten 32 der Tiefziehabschnitt 20 des Schiebedachrahmens 10 gefertigt.

Anschließend wird ohne Umsetzen des Thermoplastens 32 bzw. des Tiefziehabschnitts 20 über einen Kanal 34 des Unterwerkzeugs 30 ein Kunststoffwerkstoff in eine Kavität 36 des Werkzeugs 26 eingespritzt, deren Geometrie durch das Oberwerkzeug 28, das Unterwerkzeug 30 und durch den Tiefziehabschnitt 20, der aus dem Thermoplasten 32 gebildet wurde, definiert ist. Dadurch werden die Formabschnitte 22 an den Tiefziehabschnitt 20 angebunden.

Nachfolgend kann das fertige Verbundbauteil aus Tiefziehabschnitt 20 und Formabschnitten 22 aus dem Werkzeug 26 entformt werden.

Um dem Schiebedachrahmen gewünschte mechanische Eigenschaften verleihen zu können, erfolgt das Einlegen des Thermoplasten 32 in das Werkzeug 26 mit einer vorgegebenen Orientierung der in dem Thermoplasten 32 enthaltenen Glasfasern.

Der Tiefziehabschnitt 20 gibt die Grundform des Schiebedachrahmens 10 vor. Die Formabschnitte 22 können lokale Verstärkungen bzw. Versteifungen des Tiefziehabschnitts 20 und auch Funktionselemente des Schiebedachrahmens 10, wie beispielsweise Anschraubdome, Windabweiserlagerungen oder dergleichen darstellen.

### Bezugszeichenliste

- 10: Schiebedachrahmen
- 12: Rahmenvorderteil
- 14: Seitenholm
- 16: Querholm
- 18: Querholm
- 20: Tiefziehabschnitt
- 22: Formabschnitt
- 24: Aufnahme
- 26: Werkzeug
- 28: Oberwerkzeug
- 30: Unterwerkzeug
- 32: Thermoplast
- 34: Kanal
- 36: Kavität

## Patentansprüche

1. Verfahren zur Herstellung eines Schiebedachrahmens (10) eines Dachöffnungssystems eines Kraftfahrzeugs in einem Werkzeug (26) mit mindestens einem Formhohlraum (36), umfassend folgende Schritte:
- Einlegen mindestens eines plattenförmig ausgebildeten Halbzeugs (32) in das Werkzeug (26);
- Tiefziehen des Halbzeugs (32) in dem Werkzeug (26) zur Ausbildung mindestens eines Tiefziehabschnitts (20) des Schiebedachrahmens (10), wobei das Halbzeug (32) aus einem glasfaserverstärkten Thermoplasten gebildet ist und der Tiefziehschritt ein Thermoformprozess ist;
- anschließendes Einbringen eines Kunststoffwerkstoffs in den Formhohlraum (36) des Werkzeugs (26) zum Ausformen mindestens eines spritzgegossenen oder geschäumten Formabschnitts (22) und zum Anbinden desselben an den Tiefziehabschnitt (20);
- Entformen des Schiebedachrahmens (10) aus dem Werkzeug (26).

2. Verfahren nach Anspruch 1, **dadurch gekennzeichnet, dass** eine Faserrichtung der Fasern in den Thermoplasten (32) bezüglich des Werkzeugs (26) festgelegt wird.

3. Verfahren nach Anspruch 1 oder 2, **dadurch gekennzeichnet, dass** ein Einlegeteil in das Werkzeug eingelegt wird und durch das Einbringen des Kunststoffwerkstoffs an den Tiefziehabschnitt angebunden wird.

4. Verfahren nach einem der Ansprüche 1 bis 3, **dadurch gekennzeichnet, dass** der Tiefziehabschnitt (20) die Steifigkeit des Schiebedachrahmens (10) vorgibt und dass der Formabschnitt (22) ein Funktionselement des Schiebedachrahmens (10) umfasst.

5. Schiebedachrahmen eines Dachöffnungssystems eines Kraftfahrzeuges, **dadurch gekennzeichnet, dass** er aus einer einstückigen Baueinheit gebildet ist, die mindestens einen Tiefziehabschnitt (20) aus einem tiefgezogenen, plattenförmigen Werkstoff, der ein glasfaserverstärkter Thermoplast ist, und einen an den Tiefziehabschnitt (20) angeformten Formabschnitt (22) aus spritzgegossenem oder geschäumtem Kunststoff umfasst, und dadurch, dass der Tiefziehabschnitt (20) und der Formabschnitt (22) in einem Werkzeug (26) hergestellt sind.

6. Schiebedachrahmen nach Anspruch 5, **dadurch gekennzeichnet, dass** er ein Rahmenvorderteil (12), das sich in Fahrzeugquerrichtung erstreckt, und zwei Seitenholme (14A, 14B) umfasst, die sich jeweils in Fahrzeuglängsrichtung erstrecken, wobei das Rahmenvorderteil (12) und die Seitenholme (14A,14B) die einstückige Baueinheit aus mindestens einem Tiefziehabschnitt (20) und mindestens einem Formabschnitt (22) bilden.

## Claims

1. A method for manufacturing a sliding-roof frame (10) of a roof-opening system of a motor vehicle in a tool (26) having at least one mold cavity (36), comprising the following steps:
- inserting at least one semifinished part (32) configured in the shape of a panel into the tool (26);
- deep-drawing the semifinished part (32) in the tool (26) for configuring at least one deep-drawn section (20) of the sliding-roof frame (10), the semifinished part (32) being formed from a glass-fiber reinforced thermoplastic and the step of deep drawing being a thermoforming process;
- subsequently introducing a plastic material into the mold cavity (36) of the tool (26) for forming at least one injection-molded or foamed molded section (22) and for bonding said molded section (22) to the deep-drawn section (20);
- demolding the sliding-roof frame (10) from the tool (26).

2. The method as claimed in claim 1, **characterized in that** a fiber direction of the fibers in the thermoplastics (32) is defined in relation to the tool (26).

3. The method as claimed in claim 1 or 2, **characterized in that** an insert part is inserted into the tool and is bonded to the deep-drawn section by the introduction of the plastic material.

4. The method as claimed in one of claims 1 to 3, **characterized in that** the deep-drawn section (20) defines the stiffness of the sliding-roof frame (10) and **in that** the molded section (22) comprises a function element of the sliding-roof frame (10).

5. A sliding-roof frame of a roof-opening system of a motor vehicle, **characterized in that** it is formed by a one-piece structural unit which comprises at least one deep-drawn section (20) made of a deep-drawn, panel-shaped material, which is a glass-fiber reinforced thermoplastic, and one molded section (22) molded to the deep-drawn section (20), said molded section (22) being made of injection-molded or foamed plastic, and **in that** the deep-drawn section (20) and the molded section (22) are manufactured in a tool (26).

6. The sliding-roof frame as claimed in claim 5, **characterized in that** it comprises a frame front part (12), which extends in the transverse direction of the vehicle, and two lateral rails (14A, 14B), which each extend in the longitudinal direction of the vehicle, the frame front part (12) and the lateral rails (14A, 14B) forming the one-piece structural unit composed of at least one deep-drawn section (20) and at least one molded section (22).

## Revendications

1. Procédé de fabrication d'un cadre de toit coulissant (10) d'un système d'ouverture de toit d'un véhicule automobile dans un outil (26) ayant au moins une cavité de moule (36), le procédé comprenant les étapes suivantes :
- insérer au moins un produit semi-fini (32) configuré en forme de plaque dans l'outil (26) ;
- emboutir le produit semi-fini (32) dans l'outil (26) afin de former au moins une partie emboutie (20) du cadre de toit coulissant (10), le produit semi-fini (32) étant fait d'une matière thermoplastique renforcée de fibres de verre et l'étape d'emboutissage étant un processus de thermoformage ;
- introduire ensuite un matériau plastique dans la cavité de moule (36) de l'outil (26) afin de mouler au moins une partie moulée (22) moulée par injection ou moussée et afin de relier ladite partie moulée (22) à la partie emboutie (20) ;
- démouler le cadre de toit coulissant (10) de l'outil (26).

2. Procédé selon la revendication 1, **caractérisé en ce qu'**une direction des fibres dans les matières thermoplastiques (32) est définie par rapport à l'outil (26).

3. Procédé selon la revendication 1 or 2, **caractérisé en ce qu'**une pièce d'insertion est insérée dans l'outil et est reliée à la partie emboutie par l'introduction du matériau plastique.

4. Procédé selon l'une quelconque des revendications 1 à 3, **caractérisé en ce que** la partie emboutie (20) définit la rigidité du cadre de toit coulissant (10) et **en ce que** la partie moulée (22) comprend un élément fonctionnel du cadre de toit coulissant (10).

5. Cadre de toit coulissant d'un système d'ouverture de toit d'un véhicule automobile, **caractérisé en ce qu'**il est formé par une unité structurelle monobloc qui comprend au moins une partie emboutie (20) en un matériau embouti en forme de plaque, qui est une matière thermoplastique renforée de fibres de verre, et une partie moulée (22) en plastique moulé par injection ou moussé moulée sur la partie emboutie (20), et **en ce que** la partie emboutie (20) et la partie moulée (22) sont fabriquées dans un outil (26).

6. Cadre de toit coulissant selon la revendication 5, **caractérisé en ce qu'**il comprend une pièce avant de cadre (12), qui s'étend dans la direction transversale du véhicule, et deux rails latéraux (14A, 14B), qui s'étendent chacun dans la direction longitudinale du véhicule, la pièce avant de cadre (12) et les rails latéraux (14A, 14B) formant l'unité structurelle monobloc composée par au moins une partie emboutie (20) et au moins une partie moulée (22).
